# EUROPÄISCHE PATENTANMELDUNG

(11) **EP 1 762 350 A1**
(43) Veröffentlichungstag der Anmeldung: **14.03.2007**
(21) Anmeldenummer: 06010323.1
(22) Anmeldetag: 19.05.2006
(51) Int. Cl.: B27B 9/04, B25F 3/00, B25H 1/00, B23D 57/00

(54) **Vorrichtung zum Abtrennen des Randes einer Blechschiene**

(30) Priorität: 13.09.2005 DE 202005014399 U
(71) Anmelder: SCHMID & WEZEL GmbH & Co., 75433 Maulbronn (DE)
(72) Erfinder: Bollinger, Heinrich, 8240 Thayingen (DE)
(74) Vertreter: Dreiss, Uwe

(57) **Zusammenfassung**

Vorrichtung zum Abtrennen des Randbereiches (2) eines Blechstreifens (1), die
a. ein in einem Lager (17) drehbar gelagertes Fräs- oder Sägewerkzeug (3) mit einem Schaft (4) zum Einspannen in eine Antriebsmaschine (5),und
b. ein Gehäuse (6, 15), an dem ein Haltegriff (16) in einem solchen Abstand von der Drehachse des Schaftes (4) des Säge- oder Fräswerkzeugs (3) angebracht ist, dass die Vorrichtung von einer Bedienungsperson, die mit einer Hand den Handgriff (16) und mit der anderen Hand die Antriebsmaschine (5) hält, dem Rand (2) der Blechschiene (1) entlang führbar ist,
aufweist.

## Beschreibung

Die Erfindung betrifft eine Vorrichtung zum Abtrennen des Randes einer Blechschiene.

Solche Blechschienen, die zumindest teilweise ein U-Profil aufweisen, werden unter anderem im Türbereich von Kraftfahrzeugen zur Halterung von Dichtleisten oder Ähnlichem eingesetzt. Gelegentlich zeigen sich an diesen Rändern Materialfehler. Die Blechschienen müssen dann abgetrennt werden. Es besteht daher die Aufgabe, eine hierfür geeignete Vorrichtung bereitzustellen. Erfindungsgemäß erfolgt dies mit den in Anspruch 1 angegebenen Merkmalen. Vorteilhafte Weiterbildungen der Erfindung sind in den Unteransprüchen definiert.

Ein Ausführungsbeispiel der Erfindung und ihrer vorteilhaften Weiterbildungen wird anhand der beigefügten Zeichnungen näher beschrieben. Es stellen dar:
- Figur 1: ein Ausführungsbeispiel;
- Figur 2 und Figur 3: zwei unterschiedliche perspektivische Ansichten des Ausführungsbeispiels nach Figur 1 (jedoch ohne die Antriebsmaschine 5);
- Figur 4: die perspektivische Ansicht nach Figur 2 in teilweise geschnittenem Zustand;
- Figur 5: die Ansicht des Ausführungsbeispiels in Richtung der Pfeile V-V in Figur 1, jedoch ohne die Antriebsmaschine 5;
- Figur 6: einen Schnitt entlang der Linie VI-VI in Figur 5.

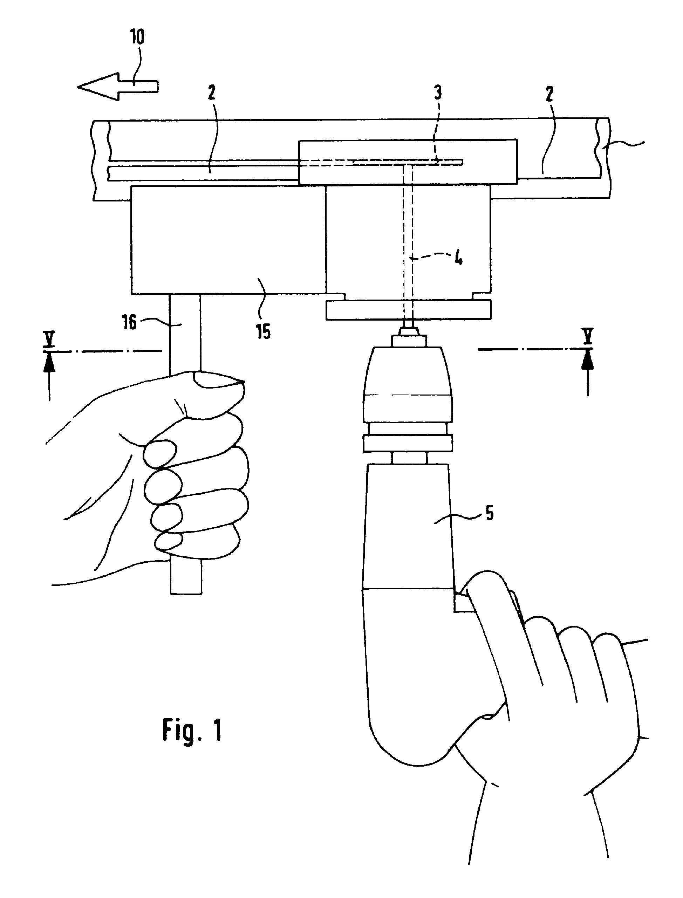

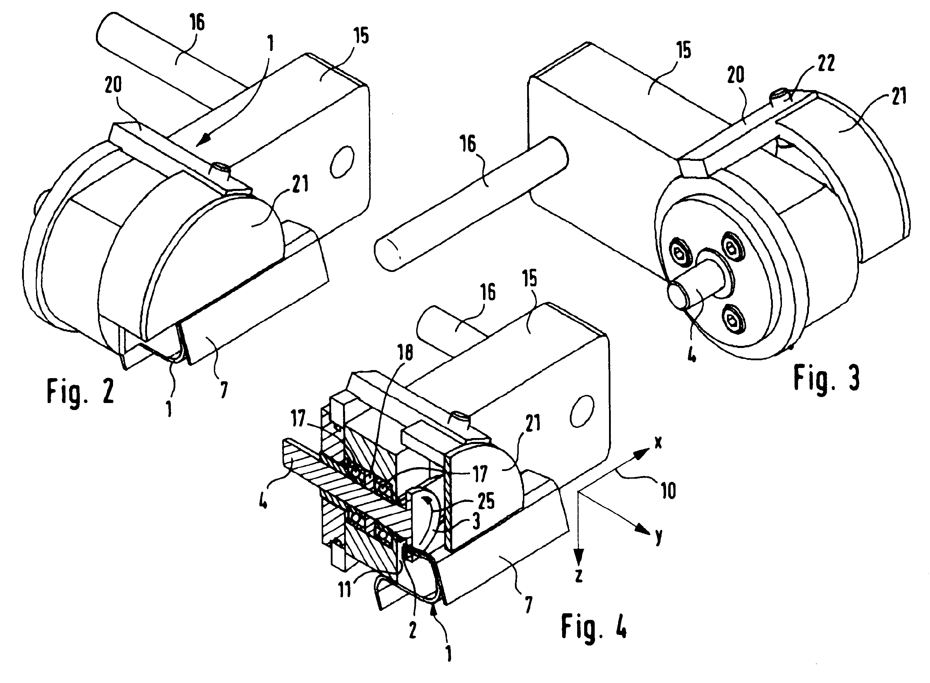

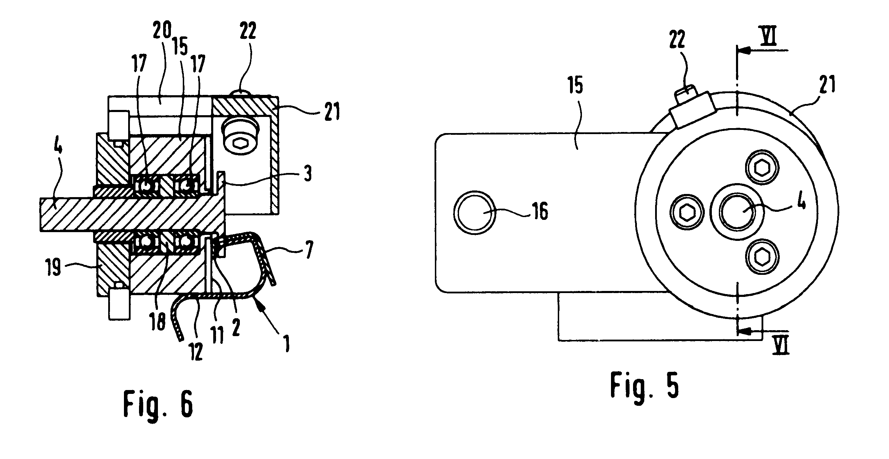

Figur 1 zeigt ein Ausführungsbeispiel, wie es in Richtung des eingezeichneten Pfeiles 10 (x-Achse) von einer Bedienungsperson bewegt werden kann, um von einer Blechschiene 1 (vgl. dazu auch Figur 4 und 6) den Randbereich 2 abzutrennen. Dies geschieht mittels eines Fräs- oder Sägewerkzeuges 3 (im Folgenden: Werkzeug), das einen Schaft 4 aufweist. Dieser Schaft 4 wird vom Spannfutter einer elektrisch oder pneumatisch angetriebenen Antriebsmaschine 5, zum Beispiel einer Bohrmaschine, aufgenommen und angetrieben. Die Vorrichtung weist ferner einen Werkzeugkörper 15 auf, an dem ein Handgriff 16 befestigt ist. Eine Bedienungsperson ergreift zum Beispiel mit der rechten Hand die Antriebsmaschine 5 und mit der linken Hand den Handgriff 16. In dieser U-förmigen Konfiguration ist die Vorrichtung leicht zu handhaben, zu führen und anzudrücken. Der Werkzeugkörper 15 ist vorzugsweise massiv und hat ein gewisses Eigengewicht von 1 - 3 kg. Das dient der Stabilisierung im Hinblick auf die von der Antriebsmaschine des Werkzeugs herrührenden Schwingungen und somit der besseren Handhabbarkeit.

Die zumindest teilweise U-Profil aufweisende Blechschiene 1 ist aus den Figuren 4 und 6 zu ersehen. Sie ist ungefähr in der Form eines liegenden "S" geschwungen und mit einem weiteren Blechstreifen 7 punktverschweißt. In dieser Form sind Blechschienen Teil des Türrahmens eines Kraftfahrzeugs und dienen unter anderem zur Halterung von Dichtlippen aus Gummi .

Aus den Figuren 4 und 6 ist auch der Randbereich 2 ersichtlich, der bei Rostbefall mit dem Werkzeug 3 abgetrennt werden soll.

Während die Vorrichtung in Richtung des Pfeils 10 (x-Achse) geführt wird, muss sie auch entlang dem - dann noch nicht abgeschnittenen - Randbereich 2 geführt werden. Sie muss ferner auch auf diesen von oben herab (z-Achse) gedrückt werden. Die Führung in x-Richtung erfolgt durch Andrücken der Führungsfläche 11 an den Randbereich 2. Die Führung in z-Richtung erfolgt durch Andrücken der Führungsfläche 12 von oben auf den waagerecht verlaufenden mittleren Teil der S-förmig geformten Blechschiene 1.

Die Führungsflächen 11 und 12 sind Teil des Werkzeugkörpers 15, das sich parallel zu der Blechschiene 1 erstreckt und auch einstückig mit dem Handgriff 16 ausgebildet sein kann.

Der Schaft 4 ist doppelt, das heißt in zwei Lagern 17, im Werkzeugkörper 15 gelagert. Zwischen den beiden Lagern ist eine Distanzhülse 18 angeordnet. Das Lager ist durch einen Flansch 19 geschlossen, an dem eine Schutzhaubenhalter 20 angeordnet ist. An dieser wiederum ist der Spänefänger 21 mittels der Schraube 22 verstellbar angeschraubt.

Von Bedeutung ist, dass der Antrieb des Werkzeuges 3 durch die Antriebsmaschine so erfolgt, dass dieses in der in Figur 4 mittels Pfeil 25 eingezeichneten Drehrichtung (im Beispiel Gegenuhrzeigersinn) gedreht wird und somit in den oberen Teil der Blechschiene von unten her einschneidet, so dass dadurch die Vorrichtung von dem sich drehenden Werkzeug 3 in z- Richtung gezogen wird.

## Patentansprüche

1. Vorrichtung zum Abtrennen des Randbereiches (2) eines Blechstreifens (1), **dadurch gekennzeichnet, dass** die Vorrichtung
a. ein in einem Lager (17) drehbar gelagertes Fräs- oder Sägewerkzeug (3) mit einem Schaft (4) zum Einspannen in eine Antriebsmaschine (5),
b. ein Gehäuse (6, 15), an dem ein Haltegriff (16) in einem solchen Abstand von der Drehachse des Schaftes (4) des Säge- oder Fräswerkzeugs (3) angebracht ist, dass die Vorrichtung von einer Bedienungsperson, die mit einer Hand den Handgriff (16) und mit der anderen Hand die Antriebsmaschine (5) hält, dem Rand (2) der Blechschiene (1) entlang führbar ist,
aufweist.

2. Vorrichtung nach Anspruch 1, **dadurch gekennzeichnet, dass** der Haltegriff (16) parallel zum Schaft (4) des Säge- oder Fräswerkzeugs (3) verläuft.

3. Vorrichtung nach Anspruch 1 oder 2, **dadurch gekennzeichnet, dass** die Drehrichtung (25) des Säge- oder Fräswerkzeugs (3) derart bestimmt ist, dass der Schnitt des Werkzeugs in die Blechschiene (1) von unten her erfolgt und somit die Vorrichtung zur Blechschiene (1) hin (z-Richtung) zieht.

4. Vorrichtung nach einem der Ansprüche 1 bis 3, **dadurch gekennzeichnet, dass** an der Vorrichtung zur Führung in Schneidrichtung (x-Richtung) und zum Andrücken an den Rand senkrecht zu dieser (y-Richtung) eine erste Führungsfläche (11) und zum Andrücken von oben nach unten (z-Richtung) eine zweite Führungsfläche (12) vorgesehen ist.

5. Vorrichtung nach einem der Ansprüche 1 bis 4, **dadurch gekennzeichnet, dass** das Fräs- oder Sägewerkzeug (3) von einem an dem Gehäuse (6, 15) verstellbar angeordneten Spänefänger (21) umgeben ist.

6. Vorrichtung nach einem der Ansprüche 1 bis 5, **dadurch gekennzeichnet, dass** der Schaft (4) des Säge- oder Fräswerkzeuges (3) doppelt gelagert (17) ist.

7. Vorrichtung nach einem der Ansprüche 1 bis 6, **dadurch gekennzeichnet, dass** der Werkzeugkörper (15) sowie der daran angeordnete Handgriff (16) einerseits und die an den Schaft (4) des Fräs- oder Sägewerkzeugs (3) angeschlossene Antriebsmaschine (5) anderseits in Draufsicht U-Form aufweisen.

8. Vorrichtung nach einem der Ansprüche 1 bis 7, **dadurch gekennzeichnet, dass** der Werkzeugkörper (15) zur Stabilisierung der Vorrichtung im Betrieb massiv mit einem Eigengewicht von 1 bis 3 kg ausgebildet ist.
